# EUROPEAN PATENT APPLICATION

(11) **EP 4 620 726 A1**
(43) Date of publication of application: **24.09.2025**
(21) Application number: 23933454.3
(22) Date of filing: 20.04.2023
(51) Int. Cl.: B60L 53/60

(54) **METHOD AND APPARATUS FOR PUBLISHING BATTERY REPLACEMENT RESOURCE INFORMATION, AND SERVER**

(71) Applicant: Contemporary Amperex Technology Co., Limited, Ningde, Fujian 352100 (CN)
(72) Inventor: ZHANG, Zhixiang, Ningde, Fujian 352100 (CN); YANG, Haiguang, Ningde, Fujian 352100 (CN); ZHANG, Xiaolin, Ningde, Fujian 352100 (CN); WANG, Jian, Ningde, Fujian 352100 (CN)
(74) Representative: Herrmann, Uwe
(86) International application number: PCT/CN2023/089479
(87) International publication number: WO 2024/216578

(57) **Abstract**

Embodiments of the present application provide a method and apparatus for publishing battery swapping resource information, and a server. The method includes: acquiring battery swapping demand information; and publishing recommended battery swapping resource information in response to the battery swapping demand information. By adopting the method for publishing battery swapping resource information provided in the embodiments of the present application, the server can respond to the battery swapping demand information transmitted by a user and feed back recommended battery swapping resource information to the user, and the user can flexibly select a battery swapping scheme according to the battery swapping resource information, thus improving the battery swapping experience of the user.

## Description

### TECHNICAL FIELD

Embodiments of the present application relates to the technical field of batteries, and in particular, to a method and apparatus for publishing battery swapping resource information, and a server.

### BACKGROUND

At present, in the field of battery swapping, the main way for users to perform battery swapping is to enter a battery swapping station for battery swapping service. Since the actual demands of different users for battery swapping are different, for example, some users pursue the shortest battery swapping time or the lowest total battery swapping cost, how to improve the battery swapping experience of the user has become a technical problem that needs to be solved urgently in this field.

### SUMMARY OF THE INVENTION

Embodiments of the present application provide a method and apparatus for publishing battery swapping resource information, and a server, which can improve the battery swapping experience of the user.

According to a first aspect, an embodiment of the present application provides a method for publishing battery swapping resource information, which includes: acquiring battery swapping demand information; and publishing recommended battery swapping resource information in response to the battery swapping demand information.

In this embodiment of the present application, the server can feed back the recommended battery swapping resource information to the user in response to the battery swapping demand information transmitted by the user, and the user can flexibly select a battery swapping scheme according to the battery swapping resource information, thus improving the battery swapping experience of the user.

In some implementations, the battery swapping resource information includes at least one of: location information of a target battery swapping station, target battery swapping time information, and battery swapping cost information, where the battery swapping cost information includes battery swapping expense cost information and/or battery swapping time cost information.

In this embodiment of the present application, since the battery swapping resource information includes at least one of: location information of a target battery swapping station, target battery swapping time information, and battery swapping cost information, where the battery swapping cost information includes battery swapping expense cost information and/or battery swapping time cost information, the server can respond to the battery swapping demand information and feed back recommended battery swapping resource information to the user, and the user can flexibly select a battery swapping scheme according to the battery swapping resource information, thus improving the battery swapping experience of the user.

In some implementations, the method further includes: generating the battery swapping resource information according to the battery swapping demand information.

In this embodiment of the present application, the server can generate the recommended battery swapping resource information according to the battery swapping demand information transmitted by the user and feed it back to the user, and the user can flexibly select a battery swapping scheme according to the battery swapping resource information, thus improving the battery swapping experience of the user.

In some implementations, the generating the battery swapping resource information according to the battery swapping demand information includes: acquiring battery resource information of at least one battery swapping station and location information of the at least one battery swapping station; and generating the battery swapping resource information according to the battery resource information of the at least one battery swapping station, the location information of the at least one battery swapping station, and the battery swapping demand information.

In this embodiment of the present application, the server may also acquire battery resource information of at least one battery swapping station and location information of the at least one battery swapping station, the server can generate recommended battery swapping resource information according to the battery resource information of the at least one battery swapping station, the location information of the at least one battery swapping station, and the battery swapping demand information, and feed it back to the user, and then the user can flexibly select a battery swapping scheme according to the battery swapping resource information, thus improving the efficiency of generating the battery swapping resource information and improving the battery swapping experience of the user.

In some implementations, the battery resource information includes at least one of: battery quantity, battery model, and battery capacity. In this way, in this embodiment of the present application, the battery resource information of the at least one battery swapping station acquired by the server includes at least one of: battery quantity, battery model, and battery capacity, thus helping to match with the battery swapping demand information of the user to determine a suitable battery swapping station, improving the efficiency of generating the battery swapping resource information, and improving the battery swapping experience of the user.

In some implementations, the battery swapping demand information includes battery quantity and battery model. In this way, the server can feed back the recommended battery resource information to the user based on the battery quantity and battery model in the battery swapping demand information, and the user can flexibly select a battery swapping scheme according to the battery swapping resource information, thus improving the battery swapping experience of the user.

In some implementations, the battery swapping demand information further includes battery swapping time information. In this way, the server can feed back the recommended battery resource information to the user based on the acquired battery swapping time information, so as to meet the battery swapping demand of the user in a specific time period, thus improving the battery swapping experience of the user.

In some implementations, the method further includes: acquiring battery swapping cost query information, where the battery swapping cost query information includes battery swapping expense cost query information and/or battery swapping time cost query information; and publishing battery swapping cost information of a target battery swapping station in response to the battery swapping cost query information, where the battery swapping cost information includes battery swapping expense cost information and/or battery swapping time cost information.

In this embodiment of the present application, the server can also acquire battery swapping cost query information, where the battery swapping cost query information includes battery swapping expense cost query information and/or battery swapping time cost query information; then the server may feed back battery swapping cost information of a target battery swapping station based on the battery swapping cost query information, where the battery swapping cost information includes battery swapping expense cost information and/or battery swapping time cost information, so that the user can select a suitable battery swapping scheme according to the actual demand of the user, thus improving the battery swapping experience of the user.

In some implementations, the method further includes: generating the battery swapping cost information of the target battery swapping station according to the battery swapping demand information and the battery swapping cost query information. In this way, the server can generate the battery swapping cost information of the target battery swapping station according to the battery swapping demand information and the battery swapping cost query information, and transmit it to the user, and the user can select a suitable battery swapping scheme according to the actual demand of the user, thus improving the battery swapping experience of the user.

In some implementations, the battery swapping expense cost query information includes at least one of: distance information between at least one battery swapping station and user location, traffic condition information, and electricity price information. In this way, after the server acquires the battery swapping expense cost query information, the server can feed back battery swapping expense cost information of a target battery swapping station to the user based on the battery swapping expense cost query information and the battery swapping demand information, and the user can select a suitable battery swapping scheme according to the actual demand of the user, thus improving the battery swapping experience of the user.

In some implementations, the battery swapping time cost query information includes at least one of: distance information between at least one battery swapping station and user location, traffic condition information, and in-station battery swapping queuing information of the at least one battery swapping station. In this way, after the server acquires the battery swapping time cost query information, the server can feed back battery swapping time cost information of a target battery swapping station to the user based on the battery swapping time cost query information and the battery swapping demand information, and the user can select a suitable battery swapping scheme according to the actual demand of the user, thus improving the battery swapping experience of the user.

According to a second aspect, an embodiment of the present application provides a method for publishing battery swapping resource information, which includes: transmitting battery swapping demand information, where the battery swapping demand information is used for determining recommended battery swapping resource information; and acquiring the recommended battery swapping resource information.

In an embodiment of the present application, the user transmits battery swapping demand information to the server, where the battery swapping demand information is used for determining recommended battery swapping resource information, that is, the server can feed back recommended battery swapping resource information to the user in response to the battery swapping demand information transmitted by the user, and then the user can flexibly select a battery swapping scheme according to the battery swapping resource information, thus improving the battery swapping experience of the user.

In some implementations, the battery swapping resource information includes at least one of: location information of a target battery swapping station, target battery swapping time information, and battery swapping cost information, where the battery swapping cost information includes battery swapping expense cost information and/or battery swapping time cost information.

In this embodiment of the present application, since the battery swapping resource information includes at least one of: location information of a target battery swapping station, target battery swapping time information, and battery swapping cost information, where the battery swapping cost information includes battery swapping expense cost information and/or battery swapping time cost information, by transmitting the battery swapping resource information to the server, the server can respond to the battery swapping demand information and feed back recommended battery swapping resource information to the user, and the user can flexibly select a battery swapping scheme according to the battery swapping resource information, thus improving the battery swapping experience of the user.

In some implementations, the battery swapping demand information includes battery quantity and battery model. In this way, by transmitting the battery swapping demand information to the server, the server can feed back the recommended battery resource information to the user based on the battery quantity and battery model in the battery swapping demand information, and the user can flexibly select a battery swapping scheme according to the battery swapping resource information, thus improving the battery swapping experience of the user.

In some implementations, the battery swapping demand information further includes battery swapping time information. In this way, by transmitting the battery swapping demand information to the server, the server can feed back the recommended battery resource information to the user based on the acquired battery swapping time information, so as to meet the battery swapping demand of the user in a specific time period, thus improving the battery swapping experience of the user.

In some implementations, the method further includes: transmitting battery swapping cost query information, where the battery swapping cost query information is used for determining battery swapping cost information of a target battery swapping station, and the battery swapping cost information includes battery swapping expense cost query information and/or battery swapping time cost query information; and acquiring the battery swapping cost information of the target battery swapping station, where the battery swapping cost information includes battery swapping expense cost information and/or battery swapping time cost information.

In this embodiment of the present application, by transmitting battery swapping cost query information to the server, where the battery swapping cost query information includes battery swapping expense cost query information and/or battery swapping time cost query information, the server can feed back battery swapping cost information of a target battery swapping station based on the battery swapping cost query information, and then the user can acquire the battery swapping cost information of the target battery swapping station, where the battery swapping cost information includes battery swapping expense cost information and/or battery swapping time cost information, so that the user can select a suitable battery swapping scheme according to the actual demand of the user, thus improving the battery swapping experience of the user.

In some implementations, the battery swapping expense cost query information includes at least one of: distance information between at least one battery swapping station and user location, traffic condition information, and electricity price information. In this way, after transmitting the battery swapping expense cost query information to the server, the server can feed back battery swapping expense cost information of a target battery swapping station to the user based on the battery swapping expense cost query information and the battery swapping demand information, and the user can select a suitable battery swapping scheme according to the actual demand of the user, thus improving the battery swapping experience of the user.

In some implementations, the battery swapping time cost query information includes at least one of: distance information between at least one battery swapping station and user location, traffic condition information, and in-station battery swapping queuing information of the at least one battery swapping station. In this way, after transmitting the battery swapping time cost query information to the server, the server can feed back battery swapping time cost information of a target battery swapping station to the user based on the battery swapping time cost query information and the battery swapping demand information, and the user can select a suitable battery swapping scheme according to the actual demand of the user, thus improving the battery swapping experience of the user.

According to a third aspect, an embodiment of the present application provides an apparatus for publishing battery swapping resource information, which includes: an acquisition unit configured to acquire battery swapping demand information; and a transmitting unit configured to publish recommended battery swapping resource information in response to the battery swapping demand information.

In some implementations, the battery swapping resource information includes at least one of: location information of a target battery swapping station, target battery swapping time information, and battery swapping cost information, where the battery swapping cost information includes battery swapping expense cost information and/or battery swapping time cost information.

In some implementations, the apparatus for publishing the battery swapping resource information further includes: a processing unit configured to generate the battery swapping resource information according to the battery swapping demand information.

In some implementations, the acquisition unit is specifically configured to acquire battery resource information of at least one battery swapping station and location information of the at least one battery swapping station; and the processing unit is specifically configured to generate the battery swapping resource information according to the battery resource information of the at least one battery swapping station, the location information of the at least one battery swapping station, and the battery swapping demand information.

In some implementations, the battery resource information includes at least one of: battery quantity, battery model, and battery capacity.

In some implementations, the battery swapping demand information includes battery quantity and battery model.

In some implementations, the battery swapping demand information further includes battery swapping time information.

In some implementations, the acquisition unit is further configured to acquire battery swapping cost query information, where the battery swapping cost query information includes battery swapping expense cost query information and/or battery swapping time cost query information; and the transmitting unit is further configured to publish battery swapping cost information of a target battery swapping station in response to the battery swapping cost query information, where the battery swapping cost information includes battery swapping expense cost information and/or battery swapping time cost information.

In some implementations, the processing unit is further configured to generate the battery swapping cost information of the target battery swapping station according to the battery swapping demand information and the battery swapping cost query information.

In some implementations, the battery swapping expense cost query information includes at least one of: distance information between at least one battery swapping station and user location, traffic condition information, and electricity price information.

In some implementations, the battery swapping time cost query information includes at least one of: distance information between at least one battery swapping station and user location, traffic condition information, and in-station battery swapping queuing information of the at least one battery swapping station.

According to a fourth aspect, an embodiment of the present application provides an apparatus for publishing battery swapping resource information, which includes: a transmitting unit configured to transmit battery swapping demand information, where the battery swapping demand information is used for determining recommended battery swapping resource information; and an acquisition unit configured to acquire the recommended battery swapping resource information.

In some implementations, the battery swapping resource information includes at least one of: location information of a target battery swapping station, target battery swapping time information, and battery swapping cost information, where the battery swapping cost information includes battery swapping expense cost information and/or battery swapping time cost information.

In some implementations, the battery swapping demand information includes battery quantity and battery model.

In some implementations, the battery swapping demand information further includes battery swapping time information.

In some implementations, the transmitting unit is further configured to transmit battery swapping cost query information, where the battery swapping cost query information is used for determining battery swapping cost information of a target battery swapping station, and the battery swapping cost information includes battery swapping expense cost query information and/or battery swapping time cost query information; and the acquisition unit is further configured to acquire the battery swapping cost information of the target battery swapping station, where the battery swapping cost information includes battery swapping expense cost information and/or battery swapping time cost information.

In some implementations, the battery swapping expense cost query information includes at least one of: distance information between at least one battery swapping station and user location, traffic condition information, and electricity price information.

In some implementations, the battery swapping time cost query information includes at least one of: distance information between at least one battery swapping station and user location, traffic condition information, and in-station battery swapping queuing information of the at least one battery swapping station.

According to a fifth aspect, an embodiment of the present application provides an apparatus for publishing battery swapping resource information, which includes a memory and a processor, where the memory is configured to store instructions, and the processor is configured to read the instructions and execute the method according to the first aspect or in any possible implementation according to the first aspect based on the instructions.

According to a sixth aspect, an embodiment of the present application provides an apparatus for publishing battery swapping resource information, which includes a memory and a processor, where the memory is configured to store instructions, and the processor is configured to read the instructions and execute the method according to the second aspect or in any possible implementation according to the second aspect based on the instructions.

According to a seventh aspect, an embodiment of the present application provides a server, which includes the apparatus according to the third aspect or in any possible implementation according to the third aspect.

According to an eighth aspect, an embodiment of the present application provides a chip, which includes: a processor configured to invoke a computer program from a memory and run the computer program, causing a device mounted with the chip to execute the method according to the first aspect or in any possible implementation according to the first aspect.

According to a ninth aspect, an embodiment of the present application provides a chip, which includes: a processor configured to invoke a computer program from a memory and run the computer program, causing a device mounted with the chip to execute the method according to the second aspect or in any possible implementation according to the second aspect.

According to a tenth aspect, an embodiment of the present application provides a computer program, which, when executed by a computer, causes the computer to implement the method according to the first aspect or in any possible implementation according to the first aspect.

According to an eleventh aspect, an embodiment of the present application provides a computer program, which, when executed by a computer, causes the computer to implement the method according to the second aspect or in any possible implementation according to the second aspect.

According to a twelfth aspect, an embodiment of the present application provides a computer-readable storage medium, which is configured to store a computer program, which, when executed by a computer, causes the computer to implement the method according to the first aspect or in any possible implementation according to the first aspect.

According to a thirteenth aspect, an embodiment of the present application provides a computer-readable storage medium, which is configured to store a computer program, which, when executed by a computer, causes the computer to implement the method according to the second aspect or in any possible implementation according to the second aspect.

### BRIEF DESCRIPTION OF DRAWINGS

FIG. 1 is a schematic diagram of an application scenario applicable to an embodiment of the present application provided in an embodiment of the present application.
FIG. 2 is a flowchart of a method for publishing battery swapping resource information provided in an embodiment of the present application.
FIG. 3 is a flowchart of another method for publishing battery swapping resource information provided in an embodiment of the present application.
FIG. 4 is a flowchart of another method for publishing battery swapping resource information provided in an embodiment of the present application.
FIG. 5 is a flowchart of another method for publishing battery swapping resource information provided in an embodiment of the present application.
FIG. 6 is a flowchart of another method for publishing battery swapping resource information provided in an embodiment of the present application.
FIG. 7 is a flowchart of another method for publishing battery swapping resource information provided in an embodiment of the present application.
FIG. 8 is a flowchart of another method for publishing battery swapping resource information provided in an embodiment of the present application.
FIG. 9 is a flowchart of another method for publishing battery swapping resource information provided in an embodiment of the present application.
FIG. 10 is a schematic block diagram of an apparatus for publishing battery swapping resource information provided in an embodiment of the present application.
FIG. 11 is a schematic block diagram of another apparatus for publishing battery swapping resource information provided in an embodiment of the present application.
FIG. 12 is a schematic block diagram of a server provided in an embodiment of the present application.
FIG. 13 is a schematic block diagram of a terminal device provided in an embodiment of the present application.

### DETAILED DESCRIPTION

Implementations of the present application will be described in further detail below in conjunction with the embodiments with reference to the drawings The following detailed description of the embodiments and the drawings are intended to exemplarily describe the principles of the embodiments of the present application, instead of limiting the scope of the embodiments of the present application, that is, the embodiments of the present application are not limited to the described embodiments.

In the description of the embodiments of the present application, it is to be noted that, unless otherwise indicated, "multiple" refers to more than two; orientations or positional relationships indicated by the terms such as "upper", "lower", "left", "right", "inner", and "outer" are only for conveniently describing the embodiments of the present application and simplifying the description, instead of indicating or implying that the apparatus or element referred to must have a particular orientation or be constructed and operated in a particular orientation, and thus cannot be construed as limiting the embodiments of the present application. In addition, the terms such as "first", "second" and "third" are only for the purpose of description, and cannot be construed as indicating or implying relative importance. "Perpendicular" is not strictly perpendicular, but within an allowable range of errors. "Parallel" is not strictly parallel, but within an allowable range of errors.

In the embodiments of the present application, the term "and/or" is only an association relationship describing associated objects, which means that there may be three relationships. For example, A and/or B may represent the following three situations: A exists alone, both A and B exist, and B exists alone. In addition, the character "/" in the embodiments of the present application generally indicates that previous and next associated objects are in an "or" relationship.

In the technical field of battery swapping, energy replenishment modes for power batteries may include a charging mode and a battery swapping mode. The battery swapping mode refers to a mode of performing centralized storage, centralized charging, and distribution on a large number of batteries through a centralized charging station, and providing battery swapping services or integrated battery charging, logistics allocation, and swapping services for terminal devices such as electric vehicles in a battery distribution station. The site where the terminal device receives battery swapping services may be called a battery swapping station.

In the vehicle battery swapping scenario, the battery swapping station is usually a fixed place where users need to drive their vehicles to complete charging and swapping services. Therefore, the main profit model of the battery swapping station is to provide charging and swapping services to customers in the station. At present, since the actual demands of different users for battery swapping are different, for example, some users pursue the shortest battery swapping time while the other users pursue the lowest battery swapping expense cost, how to improve the battery swapping experience of the user has become a technical problem that needs to be solved urgently in this field.

In view of this, an embodiment of the present application provides a method for publishing battery swapping resource information, which includes: acquiring battery swapping demand information; and publishing recommended battery swapping resource information in response to the battery swapping demand information. In this way, in this embodiment of the present application, the server can feed back the recommended battery swapping resource information to the user in response to the battery swapping demand information transmitted by the user, and the user can flexibly select a battery swapping scheme according to the battery swapping resource information, thus improving the battery swapping experience of the user.

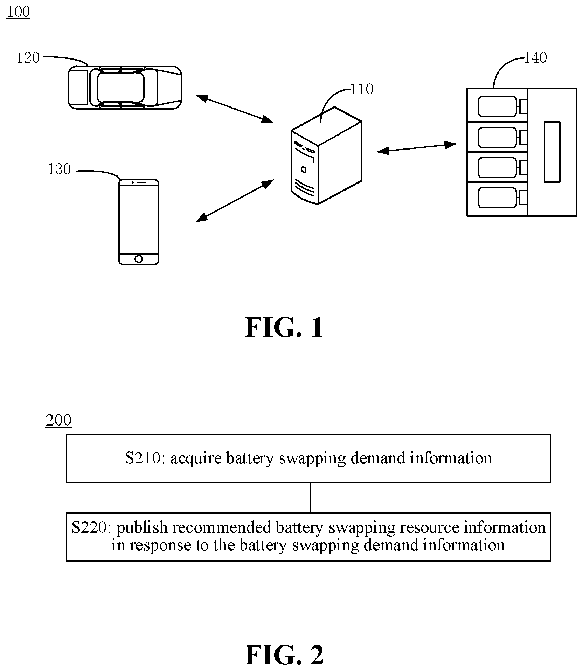

FIG. 1 is a schematic diagram of an application scenario 100 applicable to this embodiment of the present application provided in an embodiment of the present application. Referring to FIG. 1, the application scenario 100 includes a server 110, a first terminal device 120, a second terminal device 130, and a battery swapping station 140. The server 110 may communicate and interact with the first terminal device 110, the second terminal device 130, and the battery swapping station 140 respectively. Exemplarily, the first terminal device 120 may be a vehicle powered by a power battery shown in FIG. 1, and the second terminal device 130 may be a mobile phone shown in FIG. 1.

The server 110 may be configured to manage multiple battery swapping stations 140 and all batteries covered by the server 110. For example, the server 110 may communicate with a station control system in the battery swapping station 140 to know the situation of battery resources in the battery swapping station 140 in real time. For another example, the server 110 may also communicate with the terminal device of the user or a main battery management unit on the vehicle to acquire various information and data about the battery swapping demand of the user or the battery on the vehicle. It is to be understood that the server 110 in this embodiment of the present application may also be referred to as a cloud end server or a cloud server.

In some implementations, in a case that the second terminal device 130 is a mobile phone, the user may communicate and interact with the server 110 through an APP on the mobile phone. For example, in a case that the user has a battery swapping demand, the user may use the mobile phone to transmit battery swapping demand information of a battery swapping apparatus to the server 110, then the server 110 will feed back battery swapping resource information to the user based on the battery swapping demand, and the user may select a suitable battery swapping scheme according to the actual situation of the user. In some other implementations, the first terminal device 120 may be referred to as an electrical apparatus or a battery swapping apparatus.

It is to be understood that the terminal device in this embodiment of the present application may refer to a device with transmitting and receiving functions, for example, the terminal device may be an electric vehicle, an electric motorcycle, an electric bicycle, a mobile phone, a tablet, a personal computer, or the like.

The battery swapping station 140 may refer to a place that provides battery swapping services for vehicles. For example, the battery swapping station 140 may be a fixed place. The vehicle travels to the battery swapping station 140 for battery swapping. The swapped batteries may be placed in a charging compartment in the battery swapping station 140 for charging.

The entire battery swapping scenario will be described below by taking a vehicle arriving at the battery swapping station 140 for battery swapping as an example. In some implementations, batteries may include a battery arranged in the vehicle and a battery for battery swapping located in the battery swapping station 140. It is to be understood that the batteries in this embodiment of the present application may be lithium-ion batteries, lithium-metal batteries, lead-acid batteries, nickel-cadmium batteries, nickel-metal hydride batteries, lithium-sulfur batteries, lithium-air batteries, or sodium-ion batteries. In terms of the scale, the batteries may be battery cells, battery modules, or battery packs. The batteries may be used as power sources to supply power to a motor of the vehicle, and may also supply power to other electrical devices in the vehicle. For example, the batteries may supply power to devices such as in-vehicle air conditioner, display or vehicle-mounted player.

FIG. 2 is a flowchart of a method 200 for publishing battery swapping resource information according to an embodiment of the present application. In some implementations, the method 200 may be executed by the server 110 shown in FIG. 1. Referring to FIG. 2, the method 200 may include some or all of the following steps.

In S210, battery swapping demand information is acquired.

In S220, recommended battery swapping resource information is published in response to the battery swapping demand information.

In S210, the server may acquire battery swapping demand information transmitted by the terminal device. For example, in a case that the user discovers that a current battery level of the vehicle is in short supply or that there is an expected battery swapping demand in a certain period of time in the future, the user may apply for battery swapping on the APP in the mobile phone, that is, the user may transmit the battery swapping demand information to the server through the terminal device. For another example, in a case that the battery level of the electrical apparatus is less than a preset threshold, the vehicle-mounted terminal on the electrical apparatus may transit battery swapping demand information to the server on its own. For example, in a case that the battery level of the electrical apparatus is less than 20% of the total battery level, the vehicle-mounted terminal on the electrical apparatus may actively transmit battery swapping demand information to the server. It is to be also understood that after transmitting the battery swapping demand information to the server, the vehicle terminal should promptly notify the user. For example, after transmitting the battery swapping demand information to the server, the vehicle terminal may transmit notification information to the mobile phone of the user. For another example, the server may acquire battery level information of the electrical apparatus in real time, that is, the server may acquire battery state information of the electrical apparatus. In a case that the battery level of the electrical apparatus is less than the preset threshold, the server may transmit information to the mobile phone of the user or the vehicle-mounted terminal to remind the user whether a battery swapping service is needed. Then, the user can operate on the mobile phone or vehicle-mounted terminal to transmit the battery swapping demand information to the server.

In S220, the server publishes recommended battery swapping resource information in response to the battery swapping demand information. For example, the user may transmit battery swapping demand information to the server through the APP on the mobile phone. Based on the battery swapping demand information, the server feeds back recommended battery swapping resource information to the user through the APP, and the user may determine a suitable battery swapping scheme according to the actual demand after receiving the recommended battery swapping resource information.

It is to be understood that in this embodiment of the present application, the recommended battery swapping resource information may be determined by the server according to the battery swapping demand information, or the battery swapping resource information may be determined by any other server that communicates and interacts with the server. For example, after acquiring the battery swapping demand information, the server may transmit the battery swapping demand information to the other server, the other server may determine recommended battery swapping resource information according to the battery swapping demand information and feed it back to the original server, and then the original server may transmit the recommended battery swapping resource information to the user.

It is to be also understood that in this embodiment of the present application, the recommended battery swapping resource information may be understood as a recommended battery swapping scheme. For example, the recommended battery swapping scheme may include one or more battery swapping schemes. In a case that the recommended battery swapping scheme includes multiple battery swapping schemes, all of the multiple battery swapping schemes can meet the battery swapping demand of the electrical apparatus. For example, in a case that the recommended battery swapping resource information corresponds to battery swapping stations, that is, each piece of resource information in the recommended battery swapping resource information corresponds to a battery swapping station, the user may select a suitable battery swapping station according to the actual situation to complete the battery swapping service for the electrical apparatus.

In this embodiment of the present application, the server can feed back the recommended battery swapping resource information to the user in response to the battery swapping demand information transmitted by the user, and the user can flexibly select a battery swapping scheme according to the battery swapping resource information, thus improving the battery swapping experience of the user.

In some implementations, the battery swapping resource information includes at least one of: location information of a target battery swapping station, target battery swapping time information, and battery swapping cost information, where the battery swapping cost information includes battery swapping expense cost information and/or battery swapping time cost information. For example, after the user transmits battery swapping demand information to the server, the server may feed back location information of a target battery swapping station and battery swapping expense cost information and battery swapping time cost information of the target battery swapping station based on the battery swapping demand information, and the user may determine whether to perform battery swapping based on the battery swapping resource information. For another example, in a case that the server feeds back location information of multiple target battery swapping stations and battery swapping cost information of the multiple target battery swapping stations, the user may select the battery swapping station with the lowest battery swapping expense cost or the lowest battery swapping time cost from the multiple target battery swapping stations for battery swapping, so as to meet the actual demands of different users.

In this embodiment of the present application, since the battery swapping resource information includes at least one of: location information of a target battery swapping station, target battery swapping time information, and battery swapping cost information, where the battery swapping cost information includes battery swapping expense cost information and/or battery swapping time cost information, the server can respond to the battery swapping demand information and feed back recommended battery swapping resource information to the user, and the user can flexibly select a battery swapping scheme according to the battery swapping resource information, thus improving the battery swapping experience of the user.

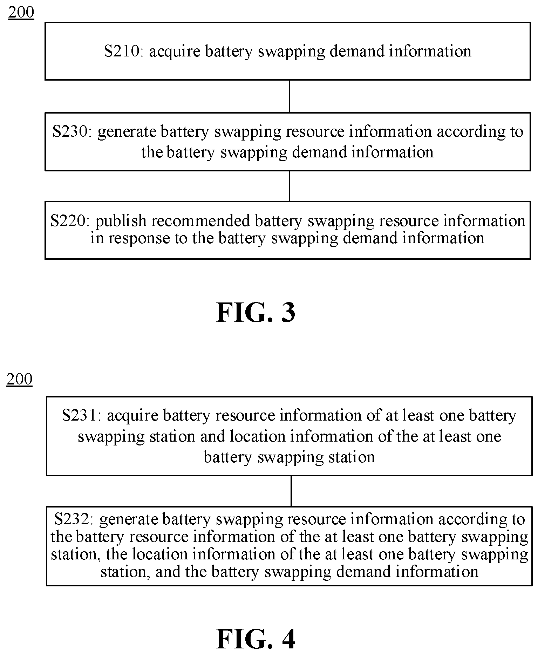

In some implementations, referring to FIG. 3, which is a flowchart of another method 200 for publishing battery swapping resource information according to an embodiment of the present application, the method 200 further includes the following step: in S230, battery swapping resource information is generated according to the battery swapping demand information.

In S230, after acquiring the battery swapping demand information of the user, the server may determine battery swapping resource information according to the battery swapping demand information. Exemplarily, the server may select a battery that matches the electrical apparatus from multiple battery swapping stations according to the battery information of the electrical apparatus with the battery to be swapped. For example, if the server acquires that a chemical system of the battery on the electrical apparatus is lithium iron phosphate, the server may exclude battery swapping stations that are not provided with lithium iron phosphate batteries or currently have no available lithium iron phosphate batteries of the multiple battery swapping stations. For another example, if the server acquires a State Of Health (SOH) of the battery on the electrical apparatus is 70%, the server may exclude battery swapping stations that include batteries with SOH less than 70%. For another example, the server may also determine a battery swapping station that not only has batteries matching the electrical apparatus, but also satisfies a user requirement on distance to the electrical apparatus according to the battery information of the electrical apparatus and the current location information of the electrical apparatus, and generate battery swapping resource information.

In some implementations, in this embodiment of the present application, in a case that the user does not specify battery swapping time, the server may generate battery swapping resource information that meets a preset battery swapping time period after acquiring the battery swapping demand information, and feed it back to the user. It is to be understood that the battery swapping resource information that meets the preset battery swapping time period may refer to the battery swapping scheme that the user can complete the battery swapping service within the preset battery swapping time period. The preset battery swapping time period may be divided by time. Exemplarily, the preset battery swapping time period may be divided by hours, minutes, or seconds. For example, the preset battery swapping time period may be set to 30min, that is, after acquiring the battery swapping demand information of the user, the sever may generate recommended battery swapping resource information that meets the preset battery swapping time period. No matter which recommended battery swapping station the user selects for the battery swapping service, it can complete the battery swapping within 30min.

In some other implementations, in this embodiment of the present application, in a case that the user does not specify a battery swapping location, the server may generate battery swapping resource information that meets a preset battery swapping distance after acquiring the battery swapping demand information, and feed it back to the user. It is to be understood that the battery swapping resource information that meets the preset battery swapping distance may refer to the battery swapping scheme that the user can complete the battery swapping service within the preset battery swapping distance. Exemplarily, the preset battery swapping distance may be divided into meters or kilometers. For example, the preset battery swapping distance may be set to 10 kilometers, that is, after acquiring the battery swapping demand information of the user, the server may generate recommended battery swapping resource information that meets the preset battery swapping distance. No matter which recommended battery swapping station the user selects for the battery swapping service, the distance between the user and the battery swapping station is less than or equal to 10 kilometers.

In this embodiment of the present application, the server can generate the recommended battery swapping resource information according to the battery swapping demand information transmitted by the user and feed it back to the user, and the user can flexibly select a battery swapping scheme according to the battery swapping resource information, thus improving the battery swapping experience of the user.

In some implementations, referring to FIG. 4, which is a flowchart of another method 200 for publishing battery swapping resource information according to an embodiment of the present application, step S230, i.e., generating battery swapping resource information according to the battery swapping demand information, includes the following steps:
In S231, battery resource information of at least one battery swapping station and location information of the at least one battery swapping station are acquired.

Exemplarily, after acquiring the battery swapping demand information of the user, the sever may also acquire battery resource information of at least one battery swapping station and location information of the at least one battery swapping station. It is to be understood that in this embodiment of the present application, in a case that the user does not select the battery swapping time and/or the battery swapping location, the server may select at least one battery swapping station that meets the requirement according to the preset battery swapping time period and/or the preset battery swapping distance, and acquire battery resource information of the at least one battery swapping station and location information of the at least one battery swapping station. It is to be also understood that in this embodiment of the present application, in a case that the user selects the battery swapping time and/or the battery swapping location, the server may select at least one battery swapping station that meets the requirement according to the battery swapping time and/or battery swapping location selected by the user, and acquire battery resource information of the at least one battery swapping station and location information of the at least one battery swapping station.

In S232, battery swapping resource information is generated according to the battery resource information of the at least one battery swapping station, the location information of the at least one battery swapping station, and the battery swapping demand information.

Exemplarily, after acquiring the battery resource information of the at least one battery swapping station and the location information of the at least one battery swapping station, the sever may generate battery swapping resource information according to the battery swapping demand information of the user. For example, the server may match the quantity of batteries to be swapped in the battery swapping demand information with the battery resource information of the at least one battery swapping station, so as to generate battery swapping resource information that meets the demand of the user.

In this embodiment of the present application, the server can also acquire battery resource information of at least one battery swapping station and location information of the at least one battery swapping station, then the server can generate recommended battery swapping resource information according to the battery resource information of the at least one battery swapping station, the location information of the at least one battery swapping station, and the battery swapping demand information, and feed it back to the user, and then the user can flexibly select a battery swapping scheme according to the battery swapping resource information, thus improving the efficiency of generating the battery swapping resource information and improving the battery swapping experience of the user.

In some implementations, the battery resource information in this embodiment of the present application includes at least one of: battery quantity, battery model, and battery capacity. In this way, in this embodiment of the present application, the battery resource information of the at least one battery swapping station acquired by the server includes at least one of: battery quantity, battery model, and battery capacity, thus helping to match with the battery swapping demand information of the user to determine a suitable battery swapping station, improving the efficiency of generating the battery swapping resource information, and improving the battery swapping experience of the user.

In some implementations, the battery swapping demand information in this embodiment of the present application includes battery quantity and battery model.

It is to be understood that the battery quantity in the battery swapping demand information in this embodiment of the present application may refer to the quantity of batteries to be swapped on the electrical apparatus. For example, it may be one or more. In some implementations, the battery quantity in the battery swapping demand information may also refer to the quantity of batteries that can be installed on the electrical apparatus. In some other implementations, the battery quantity in the battery swapping demand information may be replaced with a battery swapping mode. For example, the battery swapping mode may refer to replacing one battery on the electrical apparatus with two batteries, i.e., one for two. In this battery swapping mode, two battery can be installed on the electrical apparatus, but currently only one battery is installed, and an installation position for the other battery can be filled with a battery filling block. For another example, the battery swapping mode may also refer to replacing two batteries on the electrical apparatus with one battery, i.e., two for one. In this battery swapping mode, one battery and one battery filling block in the battery swapping station can be installed together on the electrical apparatus.

It is to be also understood that the battery model in the battery swapping demand information in this embodiment of the present application corresponds to different types of batteries. Exemplarily, batteries with different sizes have different battery models, the large model of large batteries is labeled as A and the model of small batteries is labeled as B. If the server acquires the battery model AB from the battery swapping demand information, the server may consider that the electrical apparatus requires a large battery and a small battery at the same time. The server may determine whether there are batteries of type AB in various battery swapping stations and feed back battery swapping resource information to the user.

In this embodiment of the present application, the server can feed back the recommended battery resource information to the user based on the battery quantity and battery model in the battery swapping demand information, and the user can flexibly select a battery swapping scheme according to the battery swapping resource information, thus improving the battery swapping experience of the user.

In some implementations, the battery swapping demand information further includes battery swapping time information. Exemplarily, in a case that the battery swapping demand information transmitted by the user to the server includes battery swapping time information, the server may provide recommended battery swapping resource information according to the battery swapping time information. It is to be understood that in this embodiment of the present application, the battery swapping time information in the battery swapping demand information of the user may refer to a certain time point or a certain time period. For example, the battery swapping time may be 8:00-8:30. In this case, the recommended battery swapping resource information fed back by the server to the user can allow the user to complete the battery swapping service in this time period.

In this embodiment of the present application, the server can feed back the recommended battery swapping resource information to the user based on the acquired battery swapping time information, so as to meet the battery swapping demand of the user in a specific time period, thus improving the battery swapping experience of the user.

It is to be also understood that in this embodiment of the present application, the battery swapping demand information may further include a battery level of a required battery, a chemical system of the required battery, a size of the required battery, an SOH of the required battery, and battery swapping location information. The battery level of the required battery may also refer to the electric energy or electric work of the required battery. In some implementations, the battery level of the required battery may also be equivalent to the State Of Charge (SOC) of the required battery. For example, in a case that the server acquires that the SOC of the required battery is 98%, the server may search for a battery swapping station including batteries with SOC greater than or equal to 98% in the acquired at least one battery swapping station, generate recommended battery swapping resource information, and feed it back to the user.

In this embodiment of the present application, the chemical system of the battery may be divided into ternary system batteries, lithium manganese oxide batteries, lithium iron phosphate batteries and the like according to positive electrode materials. Batteries of different chemical systems are applicable to different electrical apparatuses. In addition, the battery swapping costs of the batteries of different chemical systems are also different. Therefore, including the chemical system of the required battery in the battery swapping demand information helps the server to recommend battery swapping demand information that is more suitable for the electrical apparatus and more cost-effective to the user. It is to be understood that the size of the required battery may refer to the information about the length, width, and height of the required battery. For example, in a case that the server acquires various information such as the length, width, and height of the required battery from the battery swapping demand information, the server may determine whether there are batteries that match the size of the required battery in terms of size in the acquired at least one battery swapping station, and generate recommended battery swapping resource information. It is to be also understood that the SOH of the required battery refers to the battery capacity, health, or performance state, or the ratio of a performance parameter to a nominal parameter after the battery is used for a period of time, i.e., the ratio of the remaining capacity of the battery after being discharged at a certain rate from a fully charged state to a cut-off voltage to a corresponding nominal capacity. In a case that the server acquires that the SOH of the required battery is 70%, the server may search for a battery swapping station including batteries with SOH greater than or equal to 70% in the acquired at least one battery swapping station, and generate recommended battery swapping resource information.

In this embodiment of the present application, the battery swapping demand information further includes battery swapping location information. Exemplarily, in a case that the battery swapping demand information transmitted by the user to the server includes battery swapping location information, the server may provide recommended battery swapping resource information according to the battery swapping location information. It is to be understood that in this embodiment of the present application, the battery swapping location information in the battery swapping location information of the user may refer to a certain battery swapping station or certain several battery swapping stations, and the battery swapping location information may also refer to a certain geographical area. For example, the battery swapping location information may be a circular area with a radius of 10 kilometers centered on the electrical apparatus of the current user. In this case, the recommended battery swapping resource information fed back to the user by the server can meet the battery swapping demand of the user in this area.

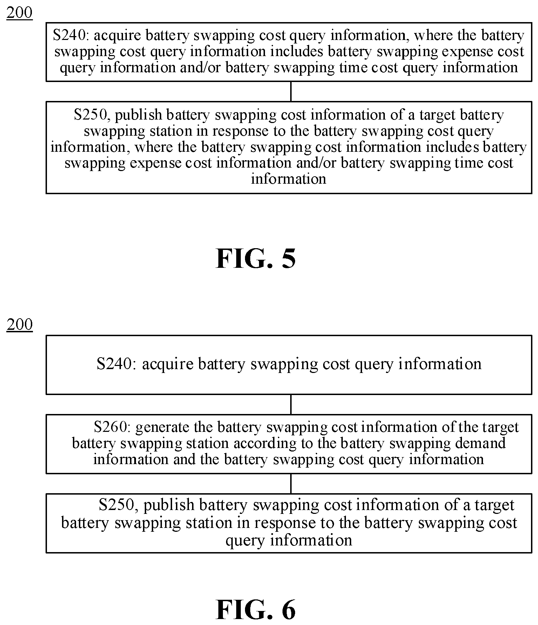

In some implementations, referring to FIG. 5, which is a flowchart of another method 200 for publishing battery swapping resource information according to an embodiment of the present application, the method 200 further includes the following steps:
In S240, battery swapping cost query information is acquired, where the battery swapping cost query information includes battery swapping expense cost query information and/or battery swapping time cost query information.

It is to be understood that in this embodiment of the present application, step S240 may be performed before step S210, or may be performed after step S210. It is to be also understood that in some implementations, the battery swapping demand information in this embodiment of the present application may include the battery swapping cost query information.

In S250, battery swapping cost information of a target battery swapping station is published in response to the battery swapping cost query information, where the battery swapping cost information includes battery swapping expense cost information and/or battery swapping time cost information.

Exemplarily, after the server acquires the battery swapping cost query information of the user, the server may feed back battery swapping cost information of a target battery swapping station to the user based on the battery swapping cost query information and the battery swapping demand information. For example, after the server acquires the battery swapping cost query information of the user, the server may feed back battery swapping cost information of a target battery swapping station to the user based on the battery swapping cost query information and the battery swapping demand information. For another example, in a case that the server does not receive the battery swapping cost query information of the user, the server may feed back battery swapping cost information of a target battery swapping station to the user based on the acquired battery swapping demand information, the battery swapping cost information includes battery swapping expense cost information and battery swapping time cost information at the same time, and then the user may select a suitable battery swapping scheme according to the demand of the user.

It is to be understood that in this embodiment of the present application, in a case that the battery swapping cost query information includes battery swapping expense cost query information and battery swapping time cost query information, the server may feed back the battery swapping expense cost information and battery swapping time cost information of the target battery swapping station to the user based on the battery swapping cost query information, and then the user may flexibly a battery swapping scheme with the least expense cost or the least time cost for the battery swapping service.

It is to be also understood that in this embodiment of the present application, the battery swapping cost information of the target battery swapping station may be determined by the server according to the battery swapping cost query information, or the battery swapping cost information of the target battery swapping station may be determined by any other communication device that communicates and interacts with the server. For example, after acquiring the battery swapping cost query information, the server may transmit the battery swapping cost query information to the other communication device, the communication device may determine battery swapping cost information of a target battery swapping station according to the battery swapping cost query information and feed it back to the server, and then the server may transmit the battery swapping cost information of the target battery swapping station to the user.

In this embodiment of the present application, the server may also acquire battery swapping cost query information, where the battery swapping cost query information includes battery swapping expense cost query information and/or battery swapping time cost query information; then the server may publish battery swapping cost information of a target battery swapping station based on the battery swapping cost query information, where the battery swapping cost information includes battery swapping expense cost information and/or battery swapping time cost information, so that the user can select a suitable battery swapping scheme according to the actual demand of the user, thus improving the battery swapping experience of the user.

In some implementations, referring to FIG. 6, which is a flowchart of another method 200 for publishing battery swapping resource information according to an embodiment of the present application, the method 200 further includes the following step: in S260, the battery swapping cost information of the target battery swapping station is generated according to the battery swapping demand information and the battery swapping cost query information. The battery swapping cost information includes battery swapping expense cost information and/or battery swapping time cost information.

In S260, after acquiring the battery swapping demand information and the battery swapping cost query information of the user, the server may determine the battery swapping cost information of the target battery swapping station according to the battery swapping demand information and the battery swapping cost query information. For example, the server may acquire the battery quantity and battery swapping expense cost query information in the battery swapping demand information of the user, determine a target battery swapping station that meets the requirement from the acquired at least one battery swapping station, generate recommended battery swapping resource information, and feed it back to the user. The recommended battery swapping resource information includes battery swapping expense cost information of the target battery swapping station. For another example, the server may acquire the battery model and battery swapping time cost query information in the battery swapping demand information of the user, determine a target battery swapping station that meets the requirement from the acquired at least one battery swapping station, generate recommended battery swapping resource information, and feed it back to the user. The recommended battery swapping resource information includes battery swapping time cost information of the target battery swapping station.

In this embodiment of the present application, the server can generate the battery swapping cost information of the target battery swapping station according to the battery swapping demand information and the battery swapping cost query information, and feed it back to the user, and the user can select a suitable battery swapping scheme according to the actual demand of the user, thus improving the battery swapping experience of the user.

In some implementations, the battery swapping expense cost query information includes at least one of: distance information between at least one battery swapping station and user location, traffic condition information, and electricity price information. It is to be understood that in this embodiment of the present application, the traffic condition information in the battery swapping expense cost query information refers to the traffic condition experienced by the user from a starting point to the target battery swapping station. The electricity price information refers to the electricity price at which the user arrives at the battery swapping station for battery swapping. The electricity price may refer to the specific electricity price at a certain time when the user arrives at the battery swapping station, or the average electricity price in a certain time period when the user arrives at the battery swapping station.

Exemplarily, in a case that the battery swapping expense cost query information includes the distance information between at least one battery swapping station and the user location and the electricity price information, the server may infer an expense corresponding to the amount of electricity required for the user to arrive at the battery swapping station according to the distance between the at least one battery swapping station and the user location, and an expense required for battery swapping at the target battery swapping station, and feed back the expense result to the user. For another example, in a case that the battery swapping expense cost query information includes the distance information between at least one battery swapping station and the user location, the traffic condition information and the electricity price information, the server may infer an expense corresponding to the amount of electricity required for the user to arrive at the battery swapping station according to the distance between the at least one battery swapping station and the user location, an expense corresponding to additional electricity consumption in the case of a traffic jam, and an expense required for battery swapping at the target battery swapping station, and feed back the expense result to the user.

In this embodiment of the present application, after the server acquires the battery swapping expense cost query information, the server can feed back battery swapping expense cost information of a target battery swapping station to the user based on the battery swapping expense cost query information and the battery swapping demand information, and the user can select a suitable battery swapping scheme according to the actual demand of the user, thus improving the battery swapping experience of the user.

In some implementations, the battery swapping time cost query information includes at least one of: distance information between at least one battery swapping station and user location, traffic condition information, and in-station battery swapping queuing information of the at least one battery swapping station.

Exemplarily, in a case that the battery swapping time cost query information includes the distance information between at least one battery swapping station and the user location, the server may infer time required for the user to arrive at the battery swapping station according to the distance between the at least one battery swapping station and the user location, and time required for battery swapping at the target battery swapping station, and feed back the time information to the user. For another example, in a case that the battery swapping time cost query information includes the distance information between at least one battery swapping station and the user location and the traffic condition information, the server may infer time required for the user to arrive at the battery swapping station according to the distance between the at least one battery swapping station and the user location, and time required for battery swapping at the target battery swapping station, and feed back the time information to the user. For another example, in a case that the battery swapping time cost query information includes the distance information between at least one battery swapping station and the user location, the traffic condition information and the in-station battery swapping queuing information of the at least one battery swapping station, the server may infer time required for the user to arrive at the battery swapping station according to the distance between the at least one battery swapping station and the user location, time required in the case of a traffic jam, time required for queuing in the target battery swapping station, and time required for battery swapping at the target battery swapping station, and feed back the time information to the user.

In this embodiment of the present application, after the server acquires the battery swapping time cost query information, the server can feed back battery swapping time cost information of a target battery swapping station to the user based on the battery swapping time cost query information and the battery swapping demand information, and the user can select a suitable battery swapping scheme according to the actual demand of the user, thus improving the battery swapping experience of the user.

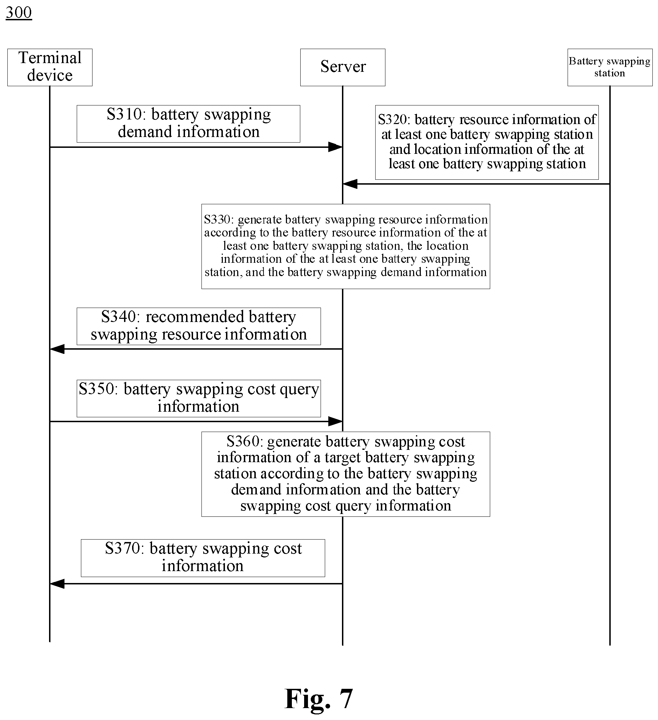

A method 300 for publishing battery swapping resource information according to an embodiment of the present application will be described below in detail with reference to FIG. 7. Referring to FIG. 7, the method 300 involves a terminal device of a user, a server, and a battery swapping station. For example, the server in the method 300 may be the server 110 shown in FIG. 1, the terminal device in the method 300 may be the first terminal device 120 and/or the second terminal device 130 shown in FIG. 1, and the battery swapping station in the method 300 may be the battery swapping station 140 shown in FIG. 1. Referring to FIG. 7, the method 300 may include some or all of the following steps.

In S310, the terminal device transmits battery swapping demand information to the server, and correspondingly, the server receives the battery swapping demand information transmitted by the terminal device.

In some implementations, the battery swapping demand information includes battery quantity and battery model. In some other implementations, the battery swapping demand information may further include battery swapping time information. It is to be understood that in this embodiment of the present application, the battery swapping demand information may further include a battery level of a required battery, a chemical system of the required battery, a size of the required battery, an SOH of the required battery, and battery swapping location information.

It is to be also understood that step S310 in the method 300 is the same or similar to step S210 in the method 200 described above, and for the sake of brevity, it will not be repeated here.

In S320, the battery swapping station transmits battery resource information of at least one battery swapping station and location information of the at least one battery swapping station to the server, and correspondingly, the server receives the battery resource information of at least one battery swapping station and location information of the at least one battery swapping station transmitted by the battery swapping station.

It is to be understood that in this embodiment of the present application, in a case that the user specifies battery swapping time or a battery swapping location, the at least one battery swapping station may refer to a battery swapping station that meets the demand of the user. For example, in a case that the battery swapping demand information transmitted by the user includes a battery swapping location, the battery swapping location refers to a circular area with a radius of 10 kilometers centered on the electrical apparatus of the current user, that is, the distance between the at least one battery swapping station and the electrical apparatus of the user is less than or equal to 10 kilometers.

It is to be also understood that in this embodiment of the present application, in a case that the user does not specify the battery swapping time or the battery swapping location, the at least one battery swapping station may refer to a battery swapping station that meets a preset battery swapping time period or a preset battery swapping distance. For example, in a case that the preset battery swapping time period is 30 minutes, that is, the user needs to complete the battery swapping service within 30 minutes, that is, the total time required for the electrical apparatus of the user to arrive at the at least one battery swapping station and complete battery swapping is less than or equal to 30 minutes.

It is to be also understood that step S320 in the method 300 is the same or similar to step S231 in the method 200 described above, and for the sake of simplicity, it will not be repeated here.

In S330, the server generates battery swapping resource information according to the battery resource information of the at least one battery swapping station, the location information of the at least one battery swapping station, and the battery swapping demand information.

In some implementations, the battery resource information in this embodiment of the present application includes at least one of: battery quantity, battery model, and battery capacity. In some other implementations, the battery swapping resource information includes at least one of: location information of a target battery swapping station, target battery swapping time information, and battery swapping cost information, where the battery swapping cost information includes battery swapping expense cost information and/or battery swapping time cost information.

It is to be understood that in this embodiment of the present application, step S330 in the method 300 is the same or similar to step S232 in the method 200 described above, and for the sake of brevity, it will not be repeated here.

In S340, the server transmits recommended battery swapping resource information to the terminal device, and correspondingly, the terminal device receives the recommended battery swapping resource information transmitted by the server. Then, after receiving the recommended battery swapping resource information, the user may determine a suitable battery swapping scheme according to the actual demand.

It is to be understood that in this embodiment of the present application, step S340 in the method 300 is the same or similar to step S220 in the method 200 described above, and for the sake of simplicity, it will not be repeated here.

In S350, the terminal device transmits battery swapping cost query information to the server, and correspondingly, the server receives the battery swapping cost query information transmitted by the terminal device.

In some implementations, the battery swapping cost query information includes battery swapping expense cost query information and/or battery swapping time cost query information. The battery swapping expense cost query information includes at least one of: distance information between at least one battery swapping station and user location, traffic condition information, and electricity price information. The battery swapping time cost query information includes at least one of: distance information between at least one battery swapping station and user location, traffic condition information, and in-station battery swapping queuing information of the at least one battery swapping station.

It is to be understood that in this embodiment of the present application, step S350 in the method 300 is the same or similar to step S240 in the method 200 described above, and for the sake of simplicity, it will not be repeated here.

In S360, the server generates battery swapping cost information of a target battery swapping station according to the battery swapping demand information and the battery swapping cost query information. In some implementations, the battery swapping cost information includes battery swapping expense cost information and/or battery swapping time cost information.

It is to be understood that in this embodiment of the present application, step S360 in the method 300 is the same or similar to step S260 in the method 200 described above, and for the sake of brevity, it will not be repeated here.

In S370, the server transmits the battery swapping cost information of the target battery swapping station to the terminal device, and correspondingly, the terminal device receives the battery swapping cost information of the target battery swapping station transmitted by the server.

Exemplarily, after the server receives the battery swapping cost query information of the user, the server may feed back the battery swapping cost information of the target battery swapping station to the user according to the battery swapping cost query information and the battery swapping demand information. For example, after the server receives the battery swapping cost query information of the user, the server may feed back the battery swapping cost information of the target battery swapping station to the user according to the battery swapping cost query information and the battery swapping demand information.

It is to be understood that in this embodiment of the present application, step S370 in the method 300 is the same or similar to step S250 in the method 200 described above, and for the sake of brevity, it will not be repeated here.

It is to be also understood that in various embodiments of the present application, the magnitude of the sequence numbers of each process above does not imply the execution order. For example, step S310 may be performed after S350. The execution order of each process should be determined by its function and internal logic, and should not constitute any limitation on the implementation process of this embodiment of the present application.

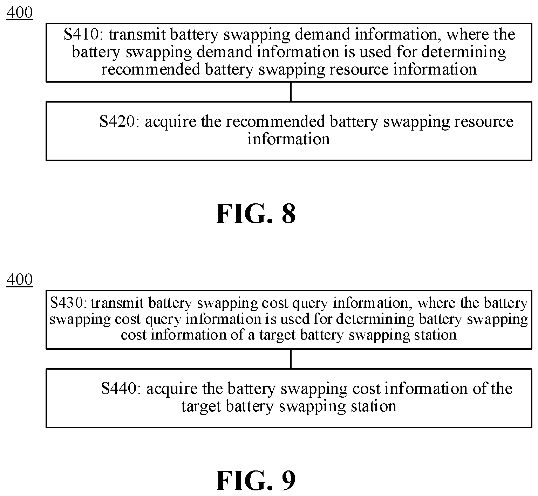

FIG. 8 is a flowchart of a method 400 for publishing battery swapping resource information according to another embodiment of the present application. In some implementations, the method 400 may be executed by the first terminal device 120 and/or the second terminal device 130 shown in FIG. 1. For example, the terminal device in this embodiment of the present application may be a mobile terminal such as a mobile phone or a tablet. For another example, the terminal device may also refer to a vehicle-mounted terminal with a human-machine interaction interface. Referring to FIG. 8, the method 400 may include some or all of the following steps.

In S410, battery swapping demand information is transmitted, where the battery swapping demand information is used for determining recommended battery swapping resource information.

In S420, the recommended battery swapping resource information is acquired.

In an embodiment of the present application, the user transmits battery swapping demand information to the server, where the battery swapping demand information is used for determining recommended battery swapping resource information, that is, the server can feed back recommended battery swapping resource information to the user in response to the battery swapping demand information transmitted by the user, and then the user can flexibly select a battery swapping scheme according to the battery swapping resource information, thus improving the battery swapping experience of the user.

In some implementations, the battery swapping resource information includes at least one of: location information of a target battery swapping station, target battery swapping time information, and battery swapping cost information, where the battery swapping cost information includes battery swapping expense cost information and/or battery swapping time cost information.

In this embodiment of the present application, since the battery swapping resource information includes at least one of: location information of a target battery swapping station, target battery swapping time information, and battery swapping cost information, where the battery swapping cost information includes battery swapping expense cost information and/or battery swapping time cost information, by transmitting the battery swapping resource information to the server, the server can respond to the battery swapping demand information and feed back recommended battery swapping resource information to the user, and the user can flexibly select a battery swapping scheme according to the battery swapping resource information, thus improving the battery swapping experience of the user.

In some implementations, the battery swapping demand information includes battery quantity and battery model. In this way, in this embodiment of the present application, by transmitting the battery swapping demand information to the server, the server can feed back the recommended battery resource information to the user based on the battery quantity and battery model in the battery swapping demand information, and the user can flexibly select a battery swapping scheme according to the battery swapping resource information, thus improving the battery swapping experience of the user.

In some implementations, the battery swapping demand information further includes battery swapping time information. In this way, in this embodiment of the present application, by transmitting the battery swapping demand information to the server, the server can feed back the recommended battery resource information to the user based on the acquired battery swapping time information, so as to meet the battery swapping demand of the user in a specific time period, thus improving the battery swapping experience of the user.

It is to be also understood that in this embodiment of the present application, the battery swapping demand information may further include a battery level of a required battery, a chemical system of the required battery, a size of the required battery, an SOH of the required battery, and battery swapping location information. The battery level of the required battery may also refer to the electric energy or electric work of the required battery. In some implementations, the battery level of the required battery may also be equivalent to the SOC of the required battery. For example, in a case that the server acquires that the SOC of the required battery is 98%, the server may search for a battery swapping station including batteries with SOC greater than or equal to 98% in the acquired at least one battery swapping station, and generate recommended battery swapping resource information.

In this embodiment of the present application, the chemical system of the battery may be divided into ternary system batteries, lithium manganese oxide batteries, lithium iron phosphate batteries and the like according to positive electrode materials. Batteries of different chemical systems are applicable to different electrical apparatuses. In addition, the battery swapping costs of the batteries of different chemical systems are also different. Therefore, including the chemical system of the required battery in the battery swapping demand information helps the server to recommend battery swapping demand information that is more suitable for the electrical apparatus and more cost-effective to the user. The size of the required battery may refer to the information about the length, width, and height of the required battery. For example, in a case that the server acquires various information such as the length, width, and height of the required battery from the battery swapping demand information, the server may determine whether there are batteries that match in terms of size in the acquired at least one battery swapping station, and generate recommended battery swapping resource information. The SOH of the required battery refers to the battery capacity, health, or performance state, or the ratio of a performance parameter to a nominal parameter after the battery is used for a period of time, i.e., the ratio of the capacity of the battery discharged at a certain rate from a fully charged state to a cut-off voltage to a corresponding nominal capacity. In a case that the server acquires that the SOH of the required battery is 70%, the server may search for a battery swapping station including batteries with SOH greater than or equal to 70% in the acquired at least one battery swapping station, and generate recommended battery swapping resource information.

In this embodiment of the present application, the battery swapping demand information further includes battery swapping location information. Exemplarily, in a case that the battery swapping demand information transmitted by the user to the server includes battery swapping location information, the server may provide recommended battery swapping resource information according to the battery swapping location information. It is to be understood that in this embodiment of the present application, the battery swapping location information in the battery swapping location information of the user may refer to a certain battery swapping station or certain several battery swapping stations, and the battery swapping location information may also refer to a certain geographical area. For example, the battery swapping location information may be a circular area with a radius of 10 kilometers centered on the electrical apparatus of the current user. In this case, the recommended battery swapping resource information fed back to the user by the server can meet the battery swapping demand of the user in this area.

In some implementations, referring to FIG. 9, which is a flowchart of another method 400 for publishing battery swapping resource information according to an embodiment of the present application, the method 400 further includes the following steps:
In S430, battery swapping cost query information is transmitted, where the battery swapping cost query information is used for determining battery swapping cost information of a target battery swapping station, and the battery swapping cost information includes battery swapping expense cost query information and/or battery swapping time cost query information.

It is to be understood that in this embodiment of the present application, step S430 may be performed before step S410, or may be performed after step S410. It is to be also understood that in some implementations, the battery swapping demand information in this embodiment of the present application may include the battery swapping cost query information.

In S440, the battery swapping cost information of the target battery swapping station is acquired, where the battery swapping cost information includes battery swapping expense cost information and/or battery swapping time cost information.

In this embodiment of the present application, by transmitting battery swapping cost query information to the server, where the battery swapping cost query information includes battery swapping expense cost query information and/or battery swapping time cost query information, the server can feed back battery swapping cost information of a target battery swapping station based on the battery swapping cost query information, and then the user can acquire the battery swapping cost information of the target battery swapping station, where the battery swapping cost information includes battery swapping expense cost information and/or battery swapping time cost information, so that the user can select a suitable battery swapping scheme according to the actual demand of the user, thus improving the battery swapping experience of the user.

In some implementations, the battery swapping expense cost query information includes at least one of: distance information between at least one battery swapping station and user location, traffic condition information, and electricity price information. In this way, after transmitting the battery swapping expense cost query information to the server, the server can feed back battery swapping expense cost information of a target battery swapping station to the user based on the battery swapping expense cost query information and the battery swapping demand information, and the user can select a suitable battery swapping scheme according to the actual demand of the user, thus improving the battery swapping experience of the user.

In some implementations, the battery swapping time cost query information includes at least one of: distance information between at least one battery swapping station and user location, traffic condition information, and in-station battery swapping queuing information of the at least one battery swapping station. In this way, after transmitting the battery swapping time cost query information to the server, the server can feed back battery swapping time cost information of a target battery swapping station to the user based on the battery swapping time cost query information and the battery swapping demand information, and the user can select a suitable battery swapping scheme according to the actual demand of the user, thus improving the battery swapping experience of the user.

It is to be understood that for the interaction between the terminal device and the server in this embodiment of the present application, a reference may be made to the description in the method 200 and the method 300 above, and for the sake of brevity, it will not be repeated here.

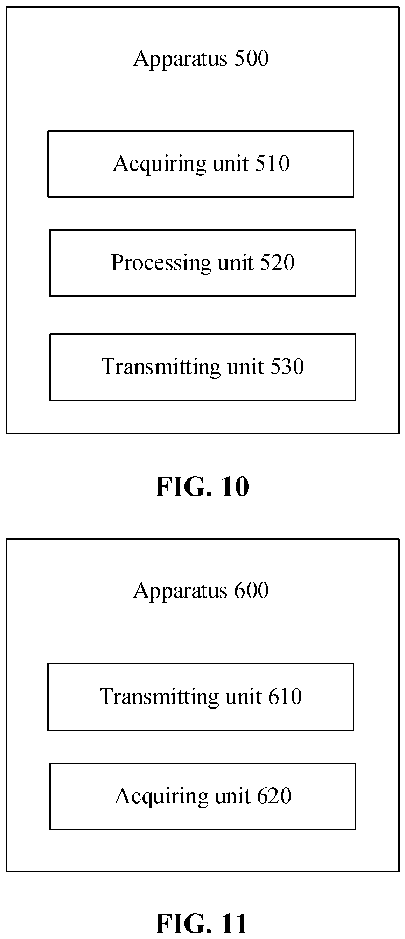

The methods for publishing battery swapping resource information according to the embodiments of the present application have been described above in detail. Apparatuses for reserved battery swapping according to the embodiments of the present application will be described below with reference to FIG. 10 to FIG. 13. The technical features described in the method embodiments are applicable to the following apparatus embodiments.

FIG. 10 is a schematic block diagram of an apparatus 500 for publishing battery swapping resource information according to an embodiment of the present application. Referring to FIG. 10, the apparatus 500 may include some or all of the following units.

Referring to FIG. 10, the apparatus 500 for publishing battery swapping resource information may include an acquisition unit 510, a processing unit 520, and a transmitting unit 530, where the acquisition unit 510 may communicate with the outside, the acquisition unit 510 may also be referred to as a communication interface or a communication unit, and the processing unit 520 is configured to process data.

The acquisition unit 510 is configured to acquire battery swapping demand information.

The processing unit 530 is configured to publish recommended battery swapping resource information in response to the battery swapping demand information.

In some implementations, the battery swapping resource information includes at least one of: location information of a target battery swapping station, target battery swapping time information, and battery swapping cost information, where the battery swapping cost information includes battery swapping expense cost information and/or battery swapping time cost information.

The processing unit 520 is configured to generate the battery swapping resource information according to the battery swapping demand information.

In some implementations, the acquisition unit 510 is specifically configured to acquire battery resource information of at least one battery swapping station and location information of the at least one battery swapping station; and the processing unit 520 is specifically configured to generate the battery swapping resource information according to the battery resource information of the at least one battery swapping station, the location information of the at least one battery swapping station, and the battery swapping demand information.

In some implementations, the battery resource information includes at least one of: battery quantity, battery model, and battery capacity.

In some implementations, the battery swapping demand information includes battery quantity and battery model.

In some implementations, the battery swapping demand information further includes battery swapping time information.

In some implementations, the acquisition unit 510 is further configured to acquire battery swapping cost query information, where the battery swapping cost query information includes battery swapping expense cost query information and/or battery swapping time cost query information; and the transmitting unit 530 is further configured to publish battery swapping cost information of a target battery swapping station in response to the battery swapping cost query information, where the battery swapping cost information includes battery swapping expense cost information and/or battery swapping time cost information.

In some implementations, the processing unit 520 is further configured to generate the battery swapping cost information of the target battery swapping station according to the battery swapping demand information and the battery swapping cost query information.

In some implementations, the battery swapping expense cost query information includes at least one of: distance information between at least one battery swapping station and user location, traffic condition information, and electricity price information.

In some implementations, the battery swapping time cost query information includes at least one of: distance information between at least one battery swapping station and user location, traffic condition information, and in-station battery swapping queuing information of the at least one battery swapping station.

It is to be understood that the apparatus 500 according to this embodiment of the present application may correspond to the server in the method 200 and the method 300 in the embodiments of the present application, the above-mentioned and other operations and/or functions of various units in the apparatus 500 are intended to implement the corresponding processes of the server in FIG. 2 to FIG. 7, and for the sake of brevity, it will not be repeated here.

FIG. 11 is a schematic block diagram of an apparatus 600 for publishing battery swapping resource information according to an embodiment of the present application. Referring to FIG. 11, the apparatus 600 may include some or all of the following units.

Referring to FIG. 11, the apparatus 600 for publishing battery swapping resource information may include a transmitting unit 610 and an acquisition unit 620, where the acquisition unit 620 may communicate with the outside, and the acquisition unit 620 may also be referred to as a communication interface or a communication unit.

The transmitting unit 610 is configured to transmit battery swapping demand information, where the battery swapping demand information is used for determining recommended battery swapping resource information.

The acquisition unit 620 is configured to acquire the recommended battery swapping resource information.

In some implementations, the battery swapping resource information includes at least one of: location information of a target battery swapping station, target battery swapping time information, and battery swapping cost information, where the battery swapping cost information includes battery swapping expense cost information and/or battery swapping time cost information.

In some implementations, the battery swapping demand information includes battery quantity and battery model.

In some implementations, the battery swapping demand information further includes battery swapping time information.

In some implementations, the transmitting unit 610 is further configured to transmit battery swapping cost query information, where the battery swapping cost query information is used for determining battery swapping cost information of a target battery swapping station, and the battery swapping cost information includes battery swapping expense cost query information and/or battery swapping time cost query information; and the acquisition unit 620 is further configured to acquire the battery swapping cost information of the target battery swapping station, where the battery swapping cost information includes battery swapping expense cost information and/or battery swapping time cost information.

In some implementations, the battery swapping expense cost query information includes at least one of: distance information between at least one battery swapping station and user location, traffic condition information, and electricity price information.

In some implementations, the battery swapping time cost query information includes at least one of: distance information between at least one battery swapping station and user location, traffic condition information, and in-station battery swapping queuing information of the at least one battery swapping station.

It is to be understood that the apparatus 600 according to this embodiment of the present application may correspond to the terminal device in the method 300 and the method 400 in the embodiments of the present application, the above-mentioned and other operations and/or functions of various units in the apparatus 600 are intended to implement the corresponding processes of the terminal device in FIG. 7 to FIG. 9, and for the sake of brevity, it will not be repeated here.

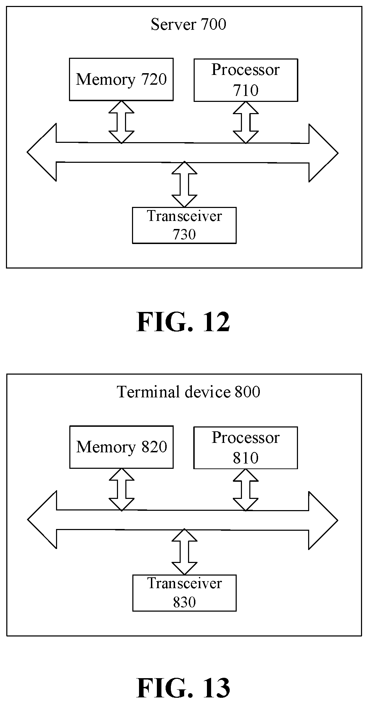

Referring to FIG. 12, an embodiment of the present application further provides a server 700. The server 700 may be the apparatus 500 in FIG. 10, and can be configured to execute the content of the server corresponding to the methods in FIG. 2 to FIG. 7. The server 700 shown in FIG. 12 includes a processor 710. The processor 710 may invoke and run a computer program from a memory to implement the methods in the embodiments of the present application.

In some implementations, referring to FIG. 12, the server 700 may further include a memory 720. The processor 710 may invoke and run a computer program from the memory 720 to implement the methods in the embodiments of the present application.

The memory 720 may be a separate device independent of the processor 710, or may be integrated into the processor 710.

In some implementations, referring to FIG. 12, the server 700 may further include a transceiver 730, the processor 710 may control the transceiver 730 to communicate with other devices, and specifically, it may transmit information or data to other devices, or receive information or data transmitted by other devices.

The transceiver 730 may include a transmitter and a receiver. The transceiver 730 may further include an antenna. The number of the antennas may be one or more.

In some implementations, the acquisition unit 510 and the transmitting unit 530 in the apparatus 500 may be implemented by the transceiver 730 in FIG. 12. The processing unit 520 in the apparatus 500 may be implemented by the processor 710 in FIG. 12.

Referring to FIG. 13, an embodiment of the present application further provides a terminal device 800. The terminal device 800 may be the apparatus 600 in FIG. 11, and can be configured to execute the content of the terminal device corresponding to the methods in FIG. 7 to FIG. 9. The terminal device 800 shown in FIG. 13 includes a processor 810. The processor 810 may invoke and run a computer program from a memory to implement the methods in the embodiments of the present application.

In some implementations, referring to FIG. 13, the terminal device 800 may further include a memory 820. The processor 810 may invoke and run computer programs from the memory 820 to implement the methods in the embodiments of the present application.

The memory 820 may be a separate device independent of the processor 810, or may be integrated into the processor 810.

In some implementations, referring to FIG. 13, the terminal device 800 may further include a transceiver 830, the processor 810 may control the transceiver 830 to communicate with other devices, and specifically, it may transmit information or data to other devices, or receive information or data transmitted by other devices.

The transceiver 830 may include a transmitter and a receiver. The transceiver 830 may further include an antenna. The number of the antennas may be one or more.

In some implementations, the transmitting unit 610 and the acquisition unit 620 in the apparatus 600 may be implemented by the transceiver 830 in FIG. 13.

In some implementations, an embodiment of the present application further provides a computer program. The computer program may be applied to the apparatuses for publishing battery swapping resource information in the embodiments of the present application. When the computer program runs on a computer, it causes the computer to perform the corresponding processes implemented by the apparatuses for publishing battery swapping resource information in the methods according to the embodiments of the present application. For the sake of brevity, it will not be repeated here.

An embodiment of the present application further provides a computer-readable storage medium for storing a computer program. The computer-readable storage medium may be applied to the apparatuses for publishing battery swapping resource information in the embodiments of the present application, and the computer program causes a computer to perform the corresponding processes implemented by the apparatuses in the methods according to the embodiments of the present application. For the sake of brevity, it will not be repeated here.

It is to be understood that the processor of this embodiment of the present application may be an integrated circuit chip with signal processing capability. In the implementation process, various steps of the above method embodiment can be completed by integrated logic circuits in hardware or instructions in the form of software in the processor. The processor may be a general-purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams as disclosed in the embodiments of the present application can be implemented or performed. The general purpose processor may be a microprocessor, or the processor may also be any conventional processor, etc. The steps of the method disclosed in conjunction with the embodiments of the present application can be directly embodied as being performed by the hardware decoding processor or being performed with a combination of hardware and software modules in the decoding processor. The software module may be located in a random access memory, a flash memory, a read-only memory, a programmable read-only memory, or an electrically erasable programmable memory, a register, or the like mature storage media in the art. The storage medium is located in the memory, and the processor reads the information in the memory and completes the steps of the aforementioned method in combination with the hardware thereof.

It can be understood that the memory in the embodiments of the present application may be a volatile memory or a non-volatile memory, or may include both volatile and non-volatile memories. Among them, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. By way of example and not limitation, many forms of RAMs are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, without being limited to, these memories and any other suitable type of memory.

While the present application has been described with reference to the above embodiments, various modifications may be made and components therein may be replaced with equivalents without departing from the scope of the present application. In particular, the technical features mentioned in the various examples can be combined in any manner as long as there is no structural conflict. The present application is not limited to the particular embodiments disclosed herein, but rather includes all technical solutions falling within the scope of the claims.

## Claims

1. A method for publishing battery swapping resource information, comprising:
acquiring battery swapping demand information; and
publishing recommended battery swapping resource information in response to the battery swapping demand information.

2. The method according to claim 1, wherein the battery swapping resource information comprises at least one of:
location information of a target battery swapping station, target battery swapping time information, and battery swapping cost information, wherein the battery swapping cost information comprises battery swapping expense cost information and/or battery swapping time cost information.

3. The method according to claim 1 or 2, wherein the method further comprises:
generating the battery swapping resource information according to the battery swapping demand information.

4. The method according to claim 3, wherein the generating the battery swapping resource information according to the battery swapping demand information comprises:
acquiring battery resource information of at least one battery swapping station and location information of the at least one battery swapping station; and
generating the battery swapping resource information according to the battery resource information of the at least one battery swapping station, the location information of the at least one battery swapping station, and the battery swapping demand information.

5. The method according to claim 4, wherein the battery resource information comprises at least one of: battery quantity, battery model, and battery capacity.

6. The method according to any one of claims 1 to 5, wherein the battery swapping demand information comprises battery quantity and battery model.

7. The method according to claim 6, wherein the battery swapping demand information further comprises battery swapping time information.

8. The method according to any one of claims 1 to 7, wherein the method further comprises:
acquiring battery swapping cost query information, wherein the battery swapping cost query information comprises battery swapping expense cost query information and/or battery swapping time cost query information; and
publishing battery swapping cost information of a target battery swapping station in response to the battery swapping cost query information, wherein the battery swapping cost information comprises battery swapping expense cost information and/or battery swapping time cost information.

9. The method according to claim 8, wherein the method further comprises:
generating the battery swapping cost information of the target battery swapping station according to the battery swapping demand information and the battery swapping cost query information.

10. The method according to claim 8, wherein the battery swapping expense cost query information comprises at least one of: distance information between at least one battery swapping station and user location, traffic condition information, and electricity price information.

11. The method according to claim 8, wherein the battery swapping time cost query information comprises at least one of: distance information between at least one battery swapping station and user location, traffic condition information, and in-station battery swapping queuing information of the at least one battery swapping station.

12. A method for publishing battery swapping resource information, comprising:
transmitting battery swapping demand information, wherein the battery swapping demand information is used for determining recommended battery swapping resource information; and
acquiring the recommended battery swapping resource information.

13. The method according to claim 12, wherein the battery swapping resource information comprises at least one of:
location information of a target battery swapping station, target battery swapping time information, and battery swapping cost information, wherein the battery swapping cost information comprises battery swapping expense cost information and/or battery swapping time cost information.

14. The method according to claim 12 to 13, wherein the battery swapping demand information comprises battery quantity and battery model.

15. The method according to claim 14, wherein the battery swapping demand information further comprises battery swapping time.

16. The method according to any one of claims 12 to 15, wherein the method further comprises:
transmitting battery swapping cost query information, wherein the battery swapping cost query information is used for determining battery swapping cost information of a target battery swapping station, and the battery swapping cost information comprises battery swapping expense cost query information and/or battery swapping time cost query information; and
acquiring the battery swapping cost information of the target battery swapping station, wherein the battery swapping cost information comprises battery swapping expense cost information and/or battery swapping time cost information.

17. The method according to claim 16, wherein the battery swapping expense cost query information comprises at least one of: distance information between at least one battery swapping station and user location, traffic condition information, and electricity price information.

18. The method according to claim 16, wherein the battery swapping time cost query information comprises at least one of: distance information between at least one battery swapping station and user location, traffic condition information, and in-station battery swapping queuing information of the at least one battery swapping station.

19. An apparatus for publishing battery swapping resource information, comprising:
an acquisition unit configured to acquire battery swapping demand information; and
a processing unit configured to publish recommended battery swapping resource information in response to the battery swapping demand information.

20. The apparatus according to claim 19, wherein the battery swapping resource information comprises at least one of:
location information of a target battery swapping station, target battery swapping time information, and battery swapping cost information, wherein the battery swapping cost information comprises battery swapping expense cost information and/or battery swapping time cost information.

21. An apparatus for publishing battery swapping resource information, comprising:
a transmitting unit configured to transmit battery swapping demand information, wherein the battery swapping demand information is used for determining recommended battery swapping resource information; and
an acquisition unit configured to acquire the recommended battery swapping resource information.

22. The apparatus according to claim 21, wherein the battery swapping resource information comprises at least one of:
location information of a target battery swapping station, target battery swapping time information, and battery swapping cost information, wherein the battery swapping cost information comprises battery swapping expense cost information and/or battery swapping time cost information.

23. An apparatus for publishing battery swapping resource information, comprising a memory and a processor, wherein the memory is configured to store instructions, and the processor is configured to read the instructions and execute the method according to any one of claims 1 to **11** based on the instructions.

24. An apparatus for publishing battery swapping resource information, comprising a memory and a processor, wherein the memory is configured to store instructions, and the processor is configured to read the instructions and execute the method according to any one of claims 12 to 18 according to the instructions.

25. A server, comprising the apparatus according to claim 19 or 20.
